# EUROPÄISCHE PATENTSCHRIFT

(11) **EP 3 889 575 B1**
(45) Veröffentlichungstag und Bekanntmachung des Hinweises auf die Patenterteilung: **24.04.2024**
(21) Anmeldenummer: 20166791.2
(22) Anmeldetag: 30.03.2020
(51) Int. Cl.: G01N 13/02, B01L 3/00, G01N 1/14

(54) **VERFAHREN ZUR OBERFLÄCHENUNTERSUCHUNG**
METHOD FOR SURFACE EXAMINATION
PROCÉDÉ D'INSPECTION DE SURFACE

(43) Veröffentlichungstag der Anmeldung: 06.10.2021
(73) Patentinhaber: KRÜSS GmbH, Wissenschaftliche Laborgeräte, 22453 Hamburg (DE)
(72) Erfinder: WILLERS, Thomas, 22453 Hamburg (DE)
(74) Vertreter: Hauck Patentanwaltspartnerschaft mbB

(56) Entgegenhaltungen:
- EP-B1- 2 699 884
- US-A- 4 635 488
- US-A1- 2007 148 049
- US-A1- 2009 180 106
- US-A1- 2015 362 417

## Beschreibung

Die Erfindung betrifft ein Verfahren zur Untersuchung einer Oberfläche einer Probe, wobei zunächst eine Testflüssigkeitsmenge auf eine Probenoberfläche aufgebracht und anschließend eine von der Wechselwirkung der aufgebrachten Testflüssigkeitsmenge mit der Probenoberfläche beeinflusste Eigenschaft der Testflüssigkeitsmenge ermittelt wird.

Bei der Oberflächenuntersuchung kann es sich beispielsweise um eine Kontaktwinkelmessung oder um einen sogenannten Testtintentest mittels eines *"dyne pens"* handelt. Bei der Kontaktwinkelmessung werden Tropfen der Testflüssigkeit auf die Probenoberfläche aufgebracht und der Kontaktwinkel beispielsweise optisch ermittelt. Der Kontaktwinkel ist bekanntermaßen der Winkel zwischen der Flüssigkeitsoberfläche der Testflüssigkeit und der Probenoberfläche, die durch den Tropfen kontaktiert wird. Beim Testtintentest wird mittels eines Stifts oder Pinsels ein Streifen einer Testflüssigkeit mit bekannter Oberflächenspannung auf die Probenoberfläche aufgebracht. Anschließend wird beobachtet, ob der Streifen stabil bleibt oder ob er sich zusammenzieht. Zieht sich der Tintenstreifen auf der Probenoberfläche zusammen, so stellt die Oberflächenspannung der Tinte eine Obergrenze für die Oberflächenenergie der Probe dar. Durch sukzessives Auftragen von Testtinten mit steigender Oberflächenspannung kann somit die Oberflächenenergie der Probe ermittelt werden.

Bei derartigen Methoden zur Untersuchung einer Probenoberfläche muss die auf die Probenoberfläche aufgebrachte Testflüssigkeitsmenge nach durchgeführter Messung in der Regel wieder von der Probenoberfläche entfernt werden. Dies ist insbesondere notwendig, da viele der üblicherweise verwendeten Testflüssigkeiten aufgrund eines sehr niedrigen Dampfdrucks nur über sehr lange Zeiträume verdampfen. Zudem werden zumindest einige der verwendeten Testflüssigkeiten als Gefahrstoffe klassifiziert, welche neben Gesundheitsgefahren auch eine Geruchsbelästigung darstellen können. Beispielsweise sind Diiodmethan (DIM) und 1-Bromnaphtalin (1BN) zwei häufig verwendete Testflüssigkeiten, welche nach erfolgter Messung fachgerecht entsorgt werden müssen. So ist DIM je nach Form der Aufnahme in den Körper in unterschiedlichem Maße gesundheitsschädlich. 1-BN entwickelt einen sehr unangenehmen Geruch.

Bisher ist es üblich, die Testflüssigkeitsmenge nach der Messung mithilfe eines Tuches oder eines Wattestäbchens von der Probenoberfläche zu entfernen. Hierbei kann es jedoch zu einem direkten Hautkontakt mit der Testflüssigkeit kommen, was je nach Art der Flüssigkeit gesundheitsgefährdend sein kann. Zudem kann die in das Tuch bzw. Wattestäbchen aufgenommene Testflüssigkeit weiter in die Umgebung abdampfen und so gegebenenfalls eine Gefahr bzw. eine Geruchsbelästigung darstellen.

Aus EP 2 699 884 B1 ist ein Stift mit einer porösen Spitze bekannt, mit dem unter anderem das Blut einer Ratte als flüssige Probe aufgesammelt wird. Nach dem Trocknen der Probe wird eine Kappe aufgesetzt, um die Probe zu schützen. Anschließend erfolgt eine Analyse der Blutprobe.

US 4,635,488 A beschreibt ebenfalls einen Stift zum Aufnehmen von Körperflüssigkeiten, wie beispielsweise Schweiss, Tränenflüssigkeit oder Speichel, zum Zwecke der Analyse in einem Labor. Zur Analyse der Flüssigkeit ist entweder ein in dem Stift angeordneter Teststreifen vorgesehen, oder eine schwerkraft- oder vakuumunterstützte Abgabe der Flüssigkeit mithilfe einer Extraktionsflüssigkeit.

Aus der Druckschrift EP 2 699 884 B1 ist eine Vorrichtung zum Sammeln einer Blutprobe mit einem porösen Plastikstift und einem Gehäuse bekannt geworden. Größe und Porenvolumen des Plastikstifts sollen die aufgenommene Flüssigkeitsmenge kontrollieren. Das von dem Plastikstift aufgenommene Blut wird im Anschluss analysiert, insbesondere nachdem es auf dem Plastikstift getrocknet ist.

Aus der Druckschrift US 2007/0148049 A1 ist ein Immun-Testkit bekannt geworden, das einen in einem Röhrchen angeordneten Teststreifen aufweist und eine Spitze, in der ein als Docht wirkender Filterstreifen angeordnet ist. Der Filterstreifen wird mit Blut, Serum, Speichel oder Urin in Kontakt gebracht und leitet diese zu analysierende Flüssigkeit dem Teststreifen zu.

Aus den Druckschriften US 2015/0362417 A1 und US 2009/0180106 A1 ist jeweils ein Verfahren mit den Merkmalen des Oberbegriffs des Anspruchs 1 bekannt geworden. Das Aufbringen des Tropfens und dessen Vermessung sind in beiden Druckschriften ausführlich beschrieben, über das weitere Schicksal des Tropfens findet sich jedoch nichts.

Der Erfindung liegt die Aufgabe zugrunde, ein Verfahren zur Oberflächenuntersuchung bereitzustellen, mit dem auf die Probenoberfläche aufgebrachte Testflüssigkeit möglichst einfach und sicher wieder entfernt werden kann.

Die Erfindung löst die Aufgabe durch ein Verfahren gemäß Anspruch 1 sowie durch die Verwendung eines Stifts gemäß Anspruch 14. Vorteilhafte Ausgestaltungen sind Gegenstand der abhängigen Ansprüche, der Beschreibung sowie der Figuren.

Bei dem erfindungsgemäßen Verfahren der eingangs genannten Art wird die Testflüssigkeitsmenge mit einer Absorberspitze einer Absorbereinheit aufgenommen, wobei die Absorberspitze aus einem saugfähigen Absorbermaterial besteht. Anschließend wird die Absorbereinheit verschlossen.

Die Testflüssigkeitsmenge kann beispielsweise mittels einer Pipette oder einer anderen Dosiereinheit oder auch mit einem Pinsel händisch oder automatisch auf die Probenoberfläche aufgebracht werden. Als Eigenschaft der Testflüssigkeitsmenge kann beispielsweise das Verhalten der Testflüssigkeitsmenge oder die Geometrie der Testflüssigkeitsmenge anschließend an die Aufbringung ermittelt werden. Insbesondere kann ein Kontaktwinkel zwischen der Testflüssigkeitsmenge und der Probenoberfläche als Eigenschaft der Testflüssigkeitsmenge ermittelt werden. Aus der ermittelten Eigenschaft der Testflüssigkeitsmenge kann eine Eigenschaft der Probenoberfläche abgeleitet werden, beispielsweise eine Oberflächenenergie. Anschließend an diese Messung wird die Testflüssigkeitsmenge wieder entfernt.

Erfindungsgemäß erfolgt das Entfernen der Testflüssigkeitsmenge von der Probenoberfläche nicht mit einem Tuch oder einem Wattestäbchen, sondern mit einer Absorbereinheit. Die Absorbereinheit saugt aufgrund der saugfähigen Absorberspitze die Testflüssigkeitsmenge auf und speichert diese. Die Absorberspitze kann beispielsweise Kapillaren aufweisen und die Testflüssigkeitsmenge mittels des Kapillareffekts aufsaugen. Die Absorberspitze muss lediglich mit der aufzunehmenden Testflüssigkeitsmenge in Kontakt gebracht werden, die Aufnahme der Testflüssigkeitsmenge erfolgt aufgrund der Saugfähigkeit dann selbstständig. Insbesondere muss kein Unterdruck angelegt werden. Beispielsweise kann die Absorberspitze aus einem Kunststoff mit darin angeordneten Kapillaren bestehen. Auch kann es sich bei der Absorberspitze um ein Fasermaterial, insbesondere um eine Filzspitze, oder um ein poröses Material handeln. Anschließend an die Aufnahme der Testflüssigkeitsmenge wird die Absorbereinheit verschlossen und somit das Entweichen aufgenommener Testflüssigkeit verhindert. Insbesondere kann es bei verschlossener Absorbereinheit allenfalls in geringem Umfang zu einem Abdampfen der Testflüssigkeit in die Umgebung kommen. Folglich werden Gesundheitsgefahren, beispielsweise bei Verwendung von DIM als Testflüssigkeit, sowie Geruchsbelästigungen, beispielsweise bei Verwendung von 1-BN als Testflüssigkeit, vermieden. Die Absorbereinheit kann beispielsweise verschlossen werden durch Abdecken der Absorberspitze, beispielsweise mittels einer Kappe. Die Kappe kann auf ein Gehäuse der Absorbereinheit aufsetzbar sein, wie noch erläutert wird. Insbesondere kann die Absorbereinheit gasdicht oder fast gasdicht verschlossen werden. Es kann also beispielsweise eine gasdichte Verbindung zwischen dem Gehäuse und der Kappe hergestellt werden. Gasdicht verschlossen bedeutet hierbei derart dicht verschlossen, dass aufgenommene Testflüssigkeit nicht oder nicht in relevantem Ausmaß, also insbesondere nicht in gesundheitsschädlichen oder eine Geruchsbelästigung verursachenden Mengen, durch Verdampfen entweichen kann. Zudem kann das Gehäuse für die aufgenommene Testflüssigkeit diffusionsdicht ausgebildet sein, beispielsweise ein diffusionsdichtes Material umfassen oder vollständig aus einem solchen Material, wie Metall, bestehen. Es kann dann die aufgenommene Testflüssigkeit besonders sicher in der Absorbereinheit gehalten werden, da ein Diffundieren der Testflüssigkeit durch das Gehäuse hindurch in die Umgebung verhindert werden kann.

Nach Aufnahme der Testflüssigkeit und Verschließen der Absorbereinheit kann die Absorbereinheit entsorgt werden. Das Verfahren kann folglich den Schritt des Entsorgens der Absorbereinheit umfassen. Die Absorbereinheit ist dabei bevorzugt dazu ausgebildet, mehrfach verwendet zu werden. Die Absorbereinheit kann folglich eine Testflüssigkeitsmenge aufnehmen, die größer ist, als die für eine einzelne Messung verwendete Menge an Testflüssigkeit. Beispielsweise kann im Rahmen einer Kontaktwinkelmessung ein Tropfen Testflüssigkeit mit einem Volumen von ca. 2 µl auf die Probenoberfläche aufgetragen werden. Die Absorbereinheit kann, insbesondere über einen Flüssigkeitsspeicher, zur Aufnahme von beispielsweise 2 ml Testflüssigkeit ausgebildet sein. Es kann vorgesehen sein, die Absorbereinheit erst dann zu entsorgen, wenn der Flüssigkeitsspeicher der Absorbereinheit gefüllt ist, wenn also keine weitere Testflüssigkeit aufgenommen werden kann. Das erläuterte Verfahren kann folglich wiederholt ausgeführt werden. Die Absorbereinheit kann nach Aufnahme einer der Kapazität der Absorbereinheit im Wesentlichen entsprechenden Menge an Testflüssigkeit entsorgt werden, also wenn die Aufnahme weiterer Flüssigkeit nicht oder kaum mehr möglich ist. Es kann also nach einer Ausgestaltung des Verfahrens ein Entsorgen der Absorbereinheit erst nach mehrmaliger Verwendung im Rahmen des erfindungsgemäßen Verfahrens und Aufnahme einer der Kapazität der Absorbereinheit im Wesentlichen entsprechenden Menge an Testflüssigkeit vorgesehen sein.

Nach einer Ausgestaltung kann es sich bei der Absorbereinheit um einen Stift handeln. Ein solcher Absorberstift kann ein stiftförmiges Gehäuse und einen in dem Gehäuse aufgenommenen Flüssigkeitsspeicher zur Speicherung aufgenommener Testflüssigkeit aufweisen, wobei insbesondere endseitig des Gehäuses eine Durchgangsöffnung vorgesehen sein kann, in welche die Absorberspitze aufgenommen ist. Die Absorberspitze ist dabei insbesondere anschließend an den Flüssigkeitsspeicher angeordnet, sodass durch die Absorberspitze aufgenommene Flüssigkeit in den Flüssigkeitsspeicher übergehen kann. Auch kann der Flüssigkeitsspeicher Teil der Absorberspitze sein. Der Flüssigkeitsspeicher kann eine Mine in dem Gehäuse bilden. Mit einem freien Ende ragt die Absorberspitze durch die Durchgangsöffnung aus dem Gehäuse hervor, sodass sie mit der aufzunehmenden Testflüssigkeit in Kontakt gebracht werden kann.

Der Absorberstift kann grundsätzlich für die Aufnahme von Flüssigkeiten vorgesehen sein. So kann die Absorberspitze beispielsweise eine besonders starke Saugfähigkeit, insbesondere eine besonders starke Kapillarwirkung, aufweisen, um das Aufnehmen der Testflüssigkeit zu erleichtern. Auch kann nach einer Ausgestaltung der Flüssigkeitsspeicher eine größere Saugfähigkeit, insbesondere eine größere Kapillarwirkung, aufweisen als die Absorberspitze. Die Absorberspitze kann folglich eine Saugfähigkeit, insbesondere Kapillarwirkung, aufweisen, die kleiner ist als die des Flüssigkeitsspeichers. Es kann somit sichergestellt werden, dass durch die Absorberspitze aufgenommene Testflüssigkeit in den Flüssigkeitsspeicher weitergeleitet wird und insbesondere nicht zurückfließen kann. So kann aufgrund des Unterschieds in der Saugfähigkeit zwischen Absorberspitze und Flüssigkeitsspeicher im Flüssigkeitsspeicher aufgenommene Testflüssigkeit nicht wieder über die Absorberspitze abgegeben werden.

Grundsätzlich kann jedoch auch ein nicht explizit für die Aufnahme von Flüssigkeiten vorgesehener Stift als Absorbereinheit fungieren, wobei der Stift dann einen aufnahmefähigen, insbesondere zunächst leeren, Flüssigkeitsspeicher aufweist. Insbesondere kann der Flüssigkeitsspeicher frei von Schreib- oder Malfarbe sein. So kann beispielsweise ein Fasermaler oder Filzstift als Absorbereinheit verwendet werden, der insbesondere nie gefüllt wurde. Das Verfahren ist dann besonders einfach, da keine spezifisch für die Aufnahme von Flüssigkeiten vorgesehene Absorbereinheit bereitgestellt werden muss.

Nach einer Ausgestaltung wird die Testflüssigkeitsmenge auf die Probenoberfläche in Tropfenform und/oder in Streifenform aufgebracht. Das Aufbringen der Testflüssigkeitsmenge in Tropfenform kann insbesondere dann vorgesehen sein, wenn die ermittelte Eigenschaft eine geometrische Größe ist, insbesondere ein Kontaktwinkel, ein Krümmungsradius oder ein Durchmesser. Insbesondere kann das Aufbringen der Testflüssigkeitsmenge in Tropfenform vorgesehen sein bei einer Kontaktwinkelmessung als Form der Oberflächenuntersuchung. Das Aufbringen der Testflüssigkeitsmenge in Streifenform kann insbesondere bei einer Oberflächenuntersuchung mittels einer Testtinte vorgesehen sein, wie eingangs erläutert wurde. Es kann sich entsprechend bei der Oberflächenuntersuchung um eine Kontaktwinkelmessung handeln, wobei ein Kontaktwinkel zwischen Probenoberfläche und Testflüssigkeitsmenge ermittelt wird. Insbesondere kann es sich um eine Tropfenkonturanalyse handeln, bei der der Kontaktwinkel aus dem Schattenbild des Tropfens bestimmt wird. Der Kontaktwinkel kann als Eigenschaft der aufgebrachten Testflüssigkeit verstanden werden, insbesondere in Kombination mit einer spezifischen Oberfläche. Auch kann, wie erwähnt, eine andere geometrische Größe als Eigenschaft ermittelt werden. Letztlich kann aus der Eigenschaft der Testflüssigkeitsmenge auf die Oberflächenenergie der Probe geschlossen werden. Bei der Oberflächenuntersuchung mittels einer Testtinte kann aus dem Verhalten der aufgebrachten Testtinte auf die Oberflächenenergie der Probe geschlossen werden. So kann, wie eingangs erläutert, abhängig davon, ob sich die insbesondere in Streifenform aufgebrachte Testflüssigkeit zusammenzieht, auf die Oberflächenenergie der Probe geschlossen werden.

Nach einer Ausgestaltung liegt die Testflüssigkeitsmenge im Bereich von 0,1 µl bis 50 µl, insbesondere im Bereich von 0,5 µl bis 10 µl, insbesondere im Bereich von 1 µl bis 3 µl, beispielsweise 2 µl. Insbesondere kann es sich dann um in Tropfenform aufgebrachte Testflüssigkeitsmenge handeln. Nach einer Ausgestaltung liegt die Flüssigkeitsaufnahmekapazität der Absorbereinheit, also insbesondere des Flüssigkeitsspeichers, im Bereich von 0,5 ml bis 10 ml, insbesondere im Bereich von 1 ml bis 3 ml.

Nach einer Ausgestaltung ist die Testflüssigkeitsmenge gesundheitsgefährdend und/oder geruchsbildend. Beispielsweise umfasst die Testflüssigkeit Diiodmethan und/oder 1-Bromnaphtalin. Auch kann die Testflüssigkeit beispielsweise Benzylalkohol und/oder 1-Octanol und/oder Tetradecan umfassen. Benzylalkohol ist gesundheitsschädlich beim Verschlucken oder Einatmen gemäß den EUH-Sätzen H302, H332. 1-Octanol führt zu einer starken Geruchsbelästigung. Insbesondere bei gesundheitsgefährdenden bzw. geruchsbildenden Testflüssigkeiten ist die erfindungsgemäß vorgesehene Aufnahme mittels der verschließbaren Absorbereinheit von Vorteil, da Gesundheitsgefahren bzw. Geruchsentwicklung verhindert oder zumindest vermindert werden können, wie bereits angesprochen.

Die Erfindung betrifft zudem die Verwendung eines verschließbaren Stifts als Absorbereinheit zur Aufnahme einer Testflüssigkeit von einer im Rahmen einer Oberflächenuntersuchung untersuchten Probenoberfläche zum Zwecke der Entsorgung. Der Stift wird dabei als Absorbereinheit, also als Absorberstift verwendet. Nach Aufnahme der Testflüssigkeit kann der Stift verschlossen werden, beispielsweise durch Aufsetzen einer Kappe auf ein Stiftgehäuse, so dass ein Entweichen der aufgenommenen Testflüssigkeit verhindert werden kann. Die Aufnahme der Testflüssigkeit erfolgt dabei zum Zwecke der Entsorgung der Testflüssigkeit. Die Testflüssigkeit wird nach der Aufnahme durch die Absorbereinheit folglich nicht weiterverwendet, wird insbesondere nicht untersucht oder analysiert. Bei dem verschließbaren Stift kann es sich insbesondere um einen Fasermaler handeln, wie bereits angesprochen. Die Verwendung eines insbesondere handelsüblichen Fasermalers ist besonders einfach. Der Fasermaler ist dabei leer, weist also keine gespeicherte Farbe auf.

Die Erfindung wird im Folgenden anhand von Figuren erläutert. Es zeigen:
- Figur 1: eine schematische Darstellung der Aufnahme eines Tropfens Testflüssigkeit mittels der Absorbereinheit,
- Figur 2: Messergebnisse eines Versuchs, bei dem als Testflüssigkeit Diiodmethan mittels der Absorbereinheit aufgenommen wurde, und
- Figur 3: Messergebnisse eines Versuchs, bei dem als Testflüssigkeit 1-Bromnaphtalin aufgenommen wurde.

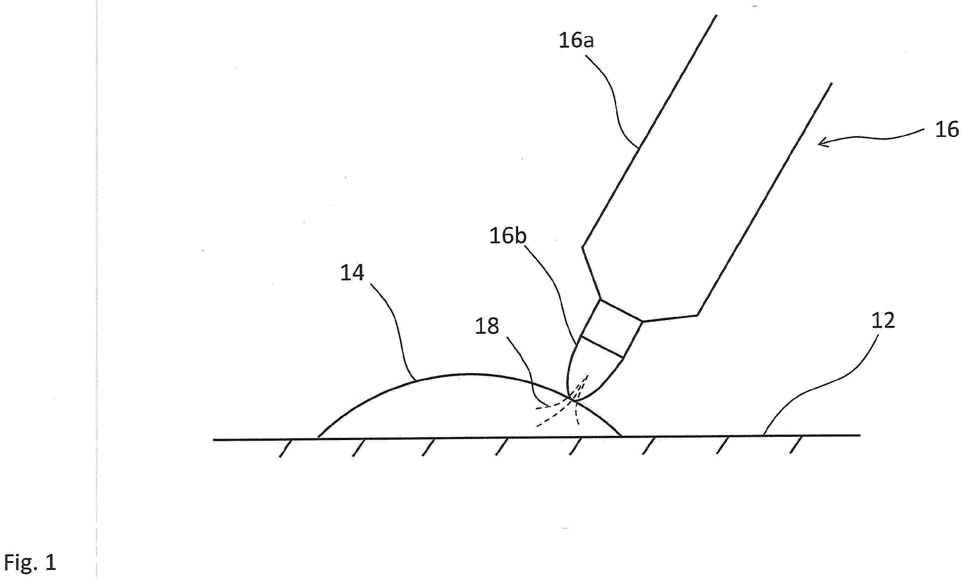

In Figur 1 ist in schematischer Darstellung die Probenoberfläche 12 einer Probe zu erkennen, auf welche in Tropfenform eine Testflüssigkeitsmenge 14 aufgebracht wurde. In grundsätzlich bekannter Weise kann anschließend eine von der Wechselwirkung der aufgebrachten Testflüssigkeitsmenge 14 mit der Probenoberfläche 12 beeinflusste Eigenschaft ermittelt werden, beispielsweise ein Kontaktwinkel zwischen der tropfenförmigen Testflüssigkeitsmenge und der Probenoberfläche. Aus der Eigenschaft kann dann wiederum eine Eigenschaft der Probe ermittelt werden, beispielsweise eine Oberflächenenergie der Probenoberfläche.

Nach dieser Messung wird die Testflüssigkeitsmenge 14 mittels einer stiftförmigen Absorbereinheit 16 aufgenommen. Die Absorbereinheit 16 ist ein Absorberstift mit einem stiftförmigen Gehäuse 16a, einem in dem Gehäuse aufgenommenen, nicht dargestellten Flüssigkeitsspeicher zur Speicherung aufgenommener Testflüssigkeit sowie einer Absorberspitze 16b, die eine Durchgangsöffnung im Gehäuse 16a durchragend aus dem Gehäuse 16a hervortritt. Die Absorberspitze 16b ist saugfähig, nimmt die Testflüssigkeitsmenge 14 folglich aufgrund ihrer Saugfähigkeit auf. Insbesondere kann die Absorberspitze 16b die Testflüssigkeitsmenge 14 mittels des Kapillareffekts aufnehmen. Die Absorberspitze kann beispielsweise aus Fasermaterial, insbesondere aus Filz, oder aus einem porösen Material bestehen. Wird die Absorberspitze 16b in Kontakt mit der Testflüssigkeitsmenge 14 gebracht, so nimmt die Absorberspitze 16b die Testflüssigkeit 14 aufgrund ihrer Saugfähigkeit auf, saugt diese also auf, wie durch die mit Bezugszeichen 18 gekennzeichneten, gestrichelten Linien dargestellt. Die Testflüssigkeit kann somit nach einer Messung, also nach dem Ermitteln zumindest einer Eigenschaft der aufgebrachten Testflüssigkeit, in besonders einfacher Weise wieder von der Probenoberfläche 12 entfernt werden.

Die Absorbereinheit 16 ist zudem verschließbar ausgebildet. So kann eine in den Figuren nicht dargestellte Kappe die Absorberspitze 16b verdeckend auf das Gehäuse 16a der Absorbereinheit 16 aufgesetzt werden. Es wird somit verhindert, dass durch die Absorbereinheit 16 aufgenommene Testflüssigkeit wieder entweicht. Die aufgenommene Testflüssigkeit ist somit sicher in der Absorbereinheit 16 gehalten und kann gemeinsam mit der Absorbereinheit 16 sicher entsorgt werden. Dies ist insbesondere bei der Verwendung von gesundheitsschädlichen oder stark geruchsbildenden Testflüssigkeiten, wie beispielsweise Diiodmethan (DIM) oder 1-Bromnaphtalin (1BN) von Vorteil. Die Absorbereinheit kann insbesondere zur Aufnahme einer Menge von Testflüssigkeit ausgebildet sein, die um einiges größer ist als die für eine einzelne Messung vorgesehene Menge an Testflüssigkeit. So kann beispielsweise der Tropfen Testflüssigkeit ein Volumen von ca. 2 µl aufweisen, während die Absorbereinheit, insbesondere aufgrund ihres entsprechend ausgebildeten Flüssigkeitsspeichers, zur Aufnahme eines Flüssigkeitsvolumens von 1 bis 2 ml ausgebildet ist.

Das Gehäuse 16a der Absorbereinheit 16 umfasst bevorzugt ein diffusionsdichtes Material, oder besteht vollständig aus einem solchen diffusionsdichten Material, beispielsweise Metall. Es kann somit die aufgenommene Testflüssigkeit besonders sicher in der Absorbereinheit 16 gehalten werden, da ein Diffundieren derselben durch das Gehäuse hindurch in die Umgebung verhindert werden kann.

Als Absorbereinheit 16 kann beispielsweise ein handelsüblicher Fasermaler verwendet werden, dessen Flüssigkeitsspeicher für die verwendete Testflüssigkeit aufnahmefähig ist. Insbesondere kann der Flüssigkeitsspeicher zunächst leer sein, also insbesondere frei von Schreib- oder Malfarbe sein. Der Fasermaler ist dann insbesondere über eine Kappe verschließbar. Das Verfahren ist dann besonders einfach, da kein spezifisch für die Aufnahme von Flüssigkeiten vorgesehener Absorberstift bereitgestellt werden muss. Es kann jedoch auch eine spezifisch für die Aufnahme von Flüssigkeiten, insbesondere von Testflüssigkeiten, vorgesehene Absorbereinheit verwendet werden. Bei einer solchen Absorbereinheit kann beispielsweise der Flüssigkeitsspeicher eine größere Kapillarwirkung aufweisen als die Absorberspitze. Hierdurch wird gewährleistet, dass aufgenommene Flüssigkeit nicht wieder über die Absorberspitze abgegeben werden kann.

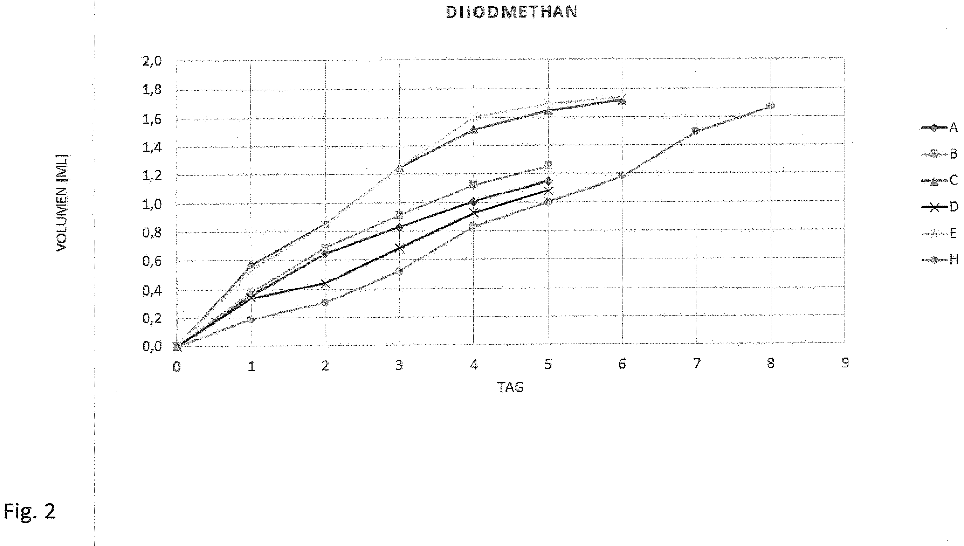

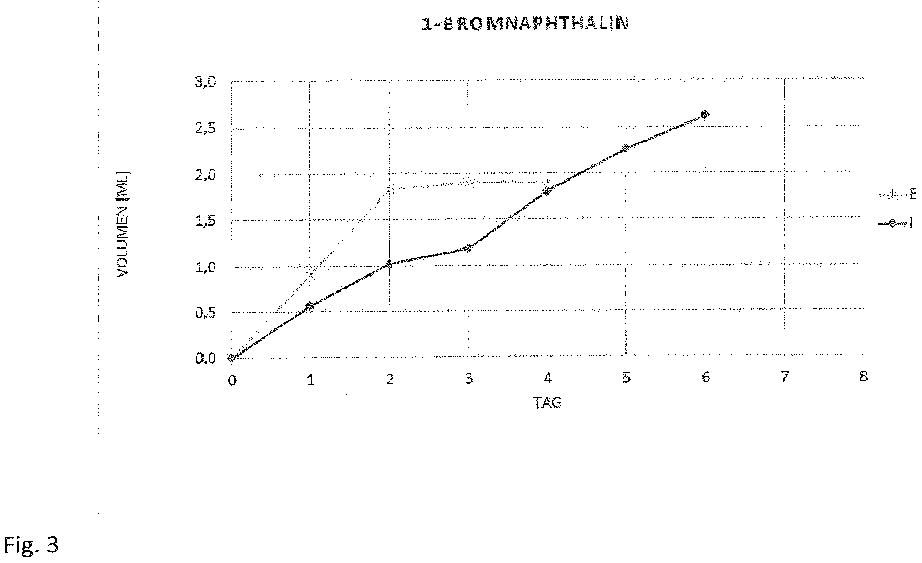

Für DIM und 1-BN als Testflüssigkeiten wurden die in den Figuren 2 bzw. 3 dargestellten Messungen durchgeführt. In beiden Fällen wurde Testflüssigkeit in Tropfenform mit einem Volumen von 2 µl auf einer Keramikplatte aufgebracht, wobei zum Aufbringen ein Oberflächenanalysegerät vom Typ DSA 100 und die *"liquid needle"* Dosiereinheit DO 3252, beides vom Hersteller KRÜSS, verwendet wurden. Anschließend wurden mit der Absorbereinheit so lange Testflüssigkeitstropfen aufgenommen, bis eine Verlangsamung der Aufnahmefähigkeit auftrat. Anschließend wurde die Absorbereinheit senkrecht mit der Absorberspitze nach oben gelagert und mit der Kappe verschlossen. Diese Messung wurde an mehreren aufeinanderfolgenden Tagen wiederholt. Die Diagramme zeigen jeweils auf der Abszisse die Tage sowie auf der Ordinate das kumulierte aufgenommene Volumen an Testflüssigkeit in Millilitern.

Im Falle von DIM wurden sechs unterschiedliche Absorbereinheiten getestet, gekennzeichnet mit A, B, C, D, E und H. Die Absorbereinheiten unterscheiden sich in ihrer Aufnahmefähigkeit für Flüssigkeiten und in ihrer Speicherkapazität, also der Kapazität ihres Flüssigkeitsspeichers. Bei der Absorbereinheit H handelt es sich um einen handelsüblichen Fasermaler mit einem Gehäuse aus Aluminium. Der Fasermaler war nicht mit Tinte gefüllt.

Im Falle von 1-BN wurden lediglich zwei Absorbereinheiten E und I mit unterschiedlicher Aufnahmefähigkeit getestet, wobei es sich bei Absorbereinheit I wiederum um den handelsüblichen Fasermaler handelt.

Wie den Diagrammen zu entnehmen, konnten mit den Absorbereinheiten Gesamtmengen von 1 ml bis 2 ml Diiodmethan, jedoch von mehr als 2 ml 1-Bromnaphtalin aufgenommen werden. Die Aufnahmefähigkeit für 1-BN ist folglich höher als für DIM. Zudem unterscheiden sich die Absorbereinheiten in ihrer Kapazität, wie erwähnt, also ihrer Gesamtaufnahmefähigkeit für Testflüssigkeit.

### Bezugszeichenliste

- 12: Probenoberfläche
- 14: Testflüssigkeit
- 16: Absorbereinheit
- 16a: stiftförmiges Gehäuse
- 16b: Absorberspitze
- 18: Linien

## Patentansprüche

1. Verfahren zur Untersuchung einer Oberfläche einer Probe, mit folgenden, in der angegebenen Reihenfolge auszuführenden Schritten:
a) Aufbringen einer Testflüssigkeitsmenge (14) auf eine Probenoberfläche (12),
b) Ermitteln einer von der Wechselwirkung der Testflüssigkeitsmenge (14) mit der Probenoberfläche (12) beeinflussten Eigenschaft der Testflüssigkeitsmenge (14), **gekennzeichnet durch** die weiteren Schritte:
c) Aufnehmen der Testflüssigkeitsmenge (14) mit einer Absorberspitze (16b) einer Absorbereinheit (16), wobei die Absorberspitze (16b) aus einem saugfähigen Absorbermaterial besteht,
d) Verschließen der Absorbereinheit (16).

2. Verfahren nach Anspruch 1, **dadurch gekennzeichnet, dass** die Absorbereinheit im Schritt d) gasdicht verschlossen wird.

3. Verfahren nach einem der vorhergehenden Ansprüche, **gekennzeichnet durch** den weiteren Schritt:
e) Entsorgen der Absorbereinheit (16).

4. Verfahren nach einem der vorhergehenden Ansprüche, **dadurch gekennzeichnet, dass** die Schritte a) bis d) wiederholt ausgeführt werden.

5. Verfahren nach einem der vorhergehenden Ansprüche, **dadurch gekennzeichnet, dass** die Absorbereinheit (16) ein Absorberstift ist, mit einem stiftförmigen Gehäuse (16a) und einem in dem Gehäuse aufgenommenen Flüssigkeitsspeicher zur Speicherung der aufgenommenen Testflüssigkeitsmenge (14), wobei das Gehäuse (16a) eine Durchgangsöffnung aufweist, in welche die Absorberspitze (16b) aufgenommen ist.

6. Verfahren nach Anspruch 5, **dadurch gekennzeichnet, dass** der Flüssigkeitsspeicher eine größere Saugfähigkeit aufweist als die Absorberspitze (16b).

7. Verfahren nach einem der vorhergehenden Ansprüche, **dadurch gekennzeichnet, dass** die im Schritt b) ermittelte Eigenschaft eine geometrische Größe ist, insbesondere ein Kontaktwinkel, ein Krümmungsradius oder ein Durchmesser.

8. Verfahren nach einem der vorhergehenden Ansprüche, **dadurch gekennzeichnet, dass** die Oberflächenuntersuchung eine Untersuchung mittels einer Testtinte ist, wobei aus dem Verhalten der aufgebrachten Testtinte auf die Oberflächenenergie der Probe geschlossen wird.

9. Verfahren nach einem der vorhergehenden Ansprüche, **dadurch gekennzeichnet, dass** im Schritt a) die Testflüssigkeitsmenge (14) auf die Probenoberfläche (12) in Tropfenform und/oder Streifenform aufgebracht wird.

10. Verfahren nach einem der vorhergehenden Ansprüche, **dadurch gekennzeichnet, dass** die Testflüssigkeitsmenge (14) im Bereich von 0,1 µl bis 50 µl liegt, insbesondere im Bereich von 0,5 µl bis 10 µl, insbesondere im Bereich von 1 µl bis 3 µl.

11. Verfahren nach einem der vorhergehenden Ansprüche, **dadurch gekennzeichnet, dass** die Kapazität der Absorbereinheit (16) für die Aufnahme der Testflüssigkeitsmenge (14) im Bereich von 0,5 ml bis 10 ml liegt, insbesondere im Bereich von 1 ml bis 3 ml.

12. Verfahren nach einem der vorhergehenden Ansprüche, **dadurch gekennzeichnet, dass** die Testflüssigkeitsmenge (14) gesundheitsgefährdend und/oder geruchsbildend ist.

13. Verfahren nach einem der vorhergehenden Ansprüche, **dadurch gekennzeichnet, dass** die Testflüssigkeitsmenge (14) Diiodmethan und/oder 1-Brom-naphtalin aufweist.

14. Verwendung eines verschließbaren Stifts als Absorbereinheit (16) zur Aufnahme einer Testflüssigkeitsmenge (14) von einer im Rahmen einer Oberflächenuntersuchung untersuchten Probenoberfläche (12) zum Zwecke der Entsorgung.

15. Verwendung nach Anspruch 14, **dadurch gekennzeichnet, dass** der Stift ein Fasermaler ist.

## Claims

1. A method for examining a surface of a sample, comprising the following steps to be carried out in the specified order:
a) applying a quantity of test liquid (14) to a sample surface (12),
b) determining a property of the quantity of test liquid (14) that is influenced by the interaction of the quantity of test liquid (14) with the sample surface (12), **characterized by** the further steps of:
c) receiving the quantity of test liquid (14) by means of an absorber tip (16b) of an absorber unit (16), wherein the absorber tip (16b) consists of an absorbent absorber material,
d) sealing the absorber unit (16).

2. The method according to claim 1, **characterized in that** the absorber unit is sealed in a gas-tight manner in step d).

3. The method according to any one of the preceding claims, **characterized by** the further step of:
e) disposing of the absorber unit (16).

4. The method according to any one of the preceding claims, **characterized in that** the steps a) to d) are carried out repeatedly.

5. The method according to any one of the preceding claims, **characterized in that** the absorber unit (16) is an absorber pen, comprising a pen-shaped housing (16a) and a liquid store received in the housing for storing the received quantity of test liquid (14), wherein the housing (16a) comprises a through-opening in which the absorber tip (16b) is received.

6. The method according to claim 5, **characterized in that** the liquid store has a greater absorbency than the absorber tip (16b).

7. The method according to any one of the preceding claims, **characterized in that** the property determined in step b) is a geometric quantity, in particular a contact angle, a radius of curvature, or a diameter.

8. The method according to any one of the preceding claims, **characterized in that** the surface examination is an examination by means of a test ink, wherein the surface energy of the sample is concluded from the behavior of the applied test ink.

9. The method according to any one of the preceding claims, **characterized in that**, in step a), the quantity of test liquid (14) is applied to the sample surface (12) in drop form and/or strip form.

10. The method according to any one of the preceding claims, **characterized in that** the quantity of test liquid (14) is in the range of from 0.1 µl to 50 µl, in particular in the range of from 0.5 µl to 10 µl, in particular in the range of from 1 µl to 3 µl.

11. The method according to any one of the preceding claims, **characterized in that** the capacity of the absorber unit (16) for receiving the quantity of test liquid (14) is in the range of from 0.5 ml to 10 ml, in particular in the range of from 1 ml to 3 ml.

12. The method according to any one of the preceding claims, **characterized in that** the quantity of test liquid (14) is hazardous to health and/or odor-forming.

13. The method according to any one of the preceding claims, **characterized in that** the quantity of test liquid (14) comprises diiodomethane and/or 1-bromonaphthalene.

14. A use of a sealable pen as an absorber unit (16) for receiving a quantity of test liquid (14) from a sample surface (12) examined within the scope of a surface examination for disposal purposes.

15. The use according to claim 14, **characterized in that** the pen is a felt-tip pen.

## Revendications

1. Procédé d'inspection de la surface d'un échantillon, comprenant les étapes suivantes, à mettre en oeuvre dans l'ordre indiqué :
a) application d'une quantité de liquide d'essai (14) sur une surface d'échantillon (12),
b) détermination d'une propriété de la quantité de liquide d'essai (14) influencée par l'interaction de la quantité de liquide d'essai (14) avec la surface d'échantillon (12), **caractérisé par** les étapes supplémentaires suivantes :
c) prélèvement de la quantité de liquide d'essai (14) avec une pointe d'absorption (16b) d'une unité d'absorption (16), dans lequel la pointe d'absorption (16b) est constituée d'un matériau d'absorption absorbant,
d) fermeture de l'unité d'absorption (16).

2. Procédé selon la revendication 1, **caractérisé en ce que** l'unité d'absorption est fermée de façon étanche au gaz dans l'étape d).

3. Procédé selon la revendication 1, **caractérisé par** l'étape supplémentaire suivante :
e) élimination de l'unité d'absorption (16).

4. Procédé selon l'une des revendications précédentes, **caractérisé en ce que** les étapes a) à d) sont mises en oeuvre de façon répétée.

5. Procédé selon l'une des revendications précédentes, **caractérisé en ce que** l'unité d'absorption (16) est une tige d'absorption, dotée d'un boîtier en forme de tige (16a) et d'un réservoir de liquide reçu dans le boîtier pour le stockage de la quantité de liquide d'essai (14) reçue, dans lequel le boîtier (16a) présente une ouverture de passage, dans laquelle est reçue la pointe d'absorption (16b).

6. Procédé selon la revendication 5, **caractérisé en ce que** le réservoir de liquide présente un pouvoir absorbant supérieur à celui de la pointe d'absorption (16b).

7. Procédé selon l'une des revendications précédentes, **caractérisé en ce que** dans l'étape b), la propriété déterminée est une grandeur géométrique, en particulier un angle de contact, un rayon de courbure ou un diamètre.

8. Procédé selon l'une des revendications précédentes, **caractérisé en ce que** l'inspection de surface est une inspection au moyen d'une encre d'essai, dans lequel le comportement de l'encre d'essai appliquée permet de déduire l'énergie de surface de l'échantillon.

9. Procédé selon l'une des revendications précédentes, **caractérisé en ce que** dans l'étape a), la quantité de liquide d'essai (14) est appliquée sur la surface d'échantillon (12) sous forme de goutte et/ou sous forme de bande.

10. Procédé selon l'une des revendications précédentes, **caractérisé en ce que** la quantité de liquide d'essai (14) est comprise dans la plage de 0,1 µl à 50 µl, en particulier dans la plage de 0,5 µl à 10 µl, en particulier dans la plage de 1 µl à 3 µl.

11. Procédé selon l'une des revendications précédentes, **caractérisé en ce que** la capacité de l'unité d'absorption (16) pour la réception de la quantité de liquide d'essai (14) est comprise dans la plage de 0,5 ml à 10 ml, en particulier dans la plage de 1 ml à 3 ml.

12. Procédé selon l'une des revendications précédentes, **caractérisé en ce que** la quantité de liquide d'essai (14) est dangereuse pour la santé et/ou forme des odeurs.

13. Procédé selon l'une des revendications précédentes, **caractérisé en ce que** la quantité de liquide d'essai (14) présente du diiodométhane et/ou du 1-bromonaphtalène.

14. Utilisation d'une tige fermable en tant qu'unité d'absorption (16) pour la réception d'une quantité de liquide d'essai (14) à partir d'une surface d'échantillon (12) inspectée dans le cadre d'une inspection de surface à des fins d'élimination.

15. Utilisation selon la revendication 14, **caractérisée en ce que** la tige est un broyeur de fibres.
